# EUROPÄISCHE PATENTANMELDUNG

(11) **EP 4 603 343 A1**
(43) Veröffentlichungstag der Anmeldung: **20.08.2025**
(21) Anmeldenummer: 25157401.8
(22) Anmeldetag: 12.02.2025
(51) Int. Cl.: B60S 3/00, B08B 5/02, B64F 1/32, B60S 3/04

(54) **VORRICHTUNG ZUM ENTEISEN VON PRITSCHENWAGEN UND VERWENDUNG**

(30) Priorität: 16.02.2024 DE 102024104420
(71) Anmelder: Deutsche Post AG, 53113 Bonn (DE)
(72) Erfinder: MEINER, Hendrik, 04356 Leipzig (DE); CURTI, Elio Massimo, 04107 Leipzig (DE); FREUND, Jens, 06116 Halle/Saale (DE)
(74) Vertreter: Michalski Hüttermann & Partner Patentanwälte mbB

(57) **Zusammenfassung**

Die Erfindung betrifft das Enteisen von Pritschenwagen (P). Es wird eine Vorrichtung (2) zum Enteisen von Pritschenwagen (P) für den Transport von Luftfrachtcontainern (L) vorgeschlagen, die Vorrichtung (2) aufweisend eine Durchfahrt (4) für die Pritschenwagen (P), ein Gestell (20) und eine an dem Gestell (20) angeordnete Enteisungseinrichtung (30) mit einem zur Durchfahrt (4) weisenden Heißluftgebläse (32, 34, 36). Die Erfindung betrifft ferner eine Anordnung (1), eine Verwendung und ein Verfahren.

## Beschreibung

Die Erfindung betrifft das Enteisen von Pritschenwagen. Insbesondere betrifft die Erfindung in diesem Zusammenhang eine Vorrichtung, eine Anordnung, eine Verwendung und ein Verfahren.

Pritschenwagen werden zum Transportieren verwendet. In der Winterzeit können Pritschenwagen vereisen bzw. einschneien oder einfrieren, so dass keine ordnungsgemäße Nutzung mehr möglich ist. Hierzu müssen Pritschenwagen enteist werden, das heißt von gefrorenem Wasser bzw. Schnee befreit werden.

Die aus dem Stand der Technik bekannten Techniken zum Enteisen von Pritschenwagen umfassen das händische Enteisen mit Werkzeug oder auch das Enteisen mit chemischen Enteisungsmitteln. Diese Techniken sind aufwendig, wenig ergonomisch und beanspruchen das Material an den Pritschenwagen stark.

US 2010/0059089 A1 beschreibt eine Vorrichtung zum Reinigen der Oberseite eines Fahrzeugs mittels Gebläsen.

KR 10 2012 0 064 352 A beschreibt eine in einer Tiefgarage fest installierte Vorrichtung zum Entfernen von Schnee und Regenwasser an einem in die Tiefgarage einfahrenden Fahrzeug mittels Heißluft.

DE 10 2013 113 327 A1 beschreibt ein Verfahren zur Reinigung einer Oberseite eines Fahrzeugs, wobei mit Umgebungsluft Ablagerungen weggeblasen werden.

Davon ausgehend ist es die Aufgabe der Erfindung, Lösungen bereitzustellen, mit denen das Enteisen von Pritschenwagen besser gelingt.

Diese Aufgabe wird durch den Gegenstand der unabhängigen Patentansprüche gelöst. Bevorzugte Weiterbildungen der Erfindung finden sich in den Unteransprüchen.

Vorgeschlagen wird eine Vorrichtung zum Enteisen von Pritschenwagen für den Transport von Luftfrachtcontainern, aufweisend eine Durchfahrt für die Pritschenwagen, ein Gestell und eine an dem Gestell angeordnete Enteisungseinrichtung mit einem zur Durchfahrt weisenden Heißluftgebläse, insbesondere mehreren der Heißluftgebläse. Beispielsweise weist das Gestell zur Bereitstellung der Durchfahrt einen ersten Seitenabschnitt und einen quer zum ersten Seitenabschnitt ausgerichteten Dachabschnitt auf. Beispielsweise ist die Enteisungseinrichtung teilweise auf dem ersten Seitenabschnitt und teilweise auf dem Dachabschnitt angeordnet. Alternativ oder ergänzend weist bzw. weisen der erste Seitenabschnitt und der Dachabschnitt jeweils eines oder mehrere der mehreren Heißluftgebläse auf.

Beispielsweise wird eine Vorrichtung vorgeschlagen, die ein Gestell aufweist, und deren Heißluftgebläse von oben und von zumindest einer Seite auf die Durchfahrt gerichtet sind. Damit wird das Enteisen besonders effektiv und die Vorrichtung ist einfach nutzbar. Solch eine Vorrichtung war bislang durch den Stand der Technik weder gezeigt noch nahegelegt.

Anders gesagt, beispielsweise, wird ein Gerät zum Entfernen von Eis oder Schnee vorgeschlagen. Das Gerät ist nicht nur zum Trocknen und/oder zum Wegblasen von Feuchtigkeit ausgebildet, sondern explizit ausgebildet zum Enteisen, und zwar von Pritschenwagen, auch Dolly bzw. Dollies genannt, die wiederum für den Transport von Luftfrachtcontainer vorgesehen bzw. ausgebildet sind. Das Gerät weist einen Durchgang oder auch einen Durchfahrtsabschnitt auf, durch den die Pritschenwagen fahren können bzw. an dem die Pritschenwagen vorbei fahren können, insbesondere um von dem Gerät enteist zu werden. Dabei weist das Gerät eine Einrichtung oder mehrere Einrichtungen zum Erhitzen und Blasen der erhitzten Luft auf, das/die, beispielsweise von oben und von der Seite, auf den Durchgang bzw. den Durchfahrtsabschnitt gerichtet ist/sind und damit auf durchfahrende Pritschenwagen abzielt/abzielen.

Die Verwaltung eines Pritschenwagen-Fuhrparks ist ein Thema der Bodenabfertigungsbranche auf Flughäfen. Auf einem großen Flughafenvorfeld gibt es zahlreiche Pritschenwagen, beispielsweise Hunderte oder Tausende. Pritschenwagen werden wie andere Fahrzeuge betrieben oder geparkt. Insbesondere, wenn Parkplätze nicht überdacht sind, aber auch im regulären Betrieb der Pritschenwagen, kann es zum Vereisen der Pritschenwagen kommen. Hier schafft die Erfindung vorteilhaft Abhilfe, um das Vereisen durch das Enteisen zumindest temporär wieder zu entfernen. Die Vorrichtung schlägt eine vorteilhafte Lösung für das Problem von vereisten Pritschenwagen vor, um diese zu enteisen. Die Vorrichtung ist optional mobil und bedarfsgerecht an verschiedenen Orten einsetzbar. Die Vorrichtung bildet gerade mit der Durchfahrt ein einfach und intuitiv nutzbares Hilfsmittel zum Enteisen von Pritschenwagen. Aufwendiges manuelles oder chemisches Enteisen kann damit teilweise oder ganz entfallen.

Die Vorrichtung ist insbesondere transportabel bzw. mobil ausgebildet. Der Begriff "transportabel" bezieht sich auf die Eigenschaft der Vorrichtung, vergleichsweise leicht von einem Ort zum anderen bewegt oder transportiert werden zu können. Diese Eigenschaft impliziert, dass die Vorrichtung in ihrer Größe, ihrem Gewicht und/oder ihrer Form derart gestaltet ist, dass sie für den Transport geeignet ist, beispielsweise durch menschliche Kraft, Fahrzeuge und/oder andere Transportmittel. Beispielsweise ist die Vorrichtung beispielsweise rollbar, verschiebbar und/oder zwischen Mobilitäts- und Betriebszustand auf- und abrüstbar (z.B. innerhalb eines Tages, innerhalb von Stunden oder gar Minuten).

Enteisen bezeichnet den Prozess, bei dem Eis, Frost und/oder Schnee von einem Gegenstand entfernt wird. Methoden des Enteisens können den Einsatz von Wärme, chemischen Enteisungsmitteln oder mechanischen Mitteln umfassen. Enteisen zielt insbesondere darauf ab, die Funktionsfähigkeit zu gewährleisten. Die Vorrichtung ist insbesondere zum Enteisen mit thermischen Prinzipien bzw. mittels Wärme/Hitze ausgebildet.

Die Durchfahrt bezeichnet insbesondere einen Abschnitt, eine Öffnung und/oder eine Passage an der Vorrichtung bzw. dem Gestell, die es ermöglicht, dass ein Pritschenwagen hindurchgeht oder hindurchgeführt wird oder unmittelbar daran vorbei geführt wird. Die Durchfahrt kann sich auf physische Abschnitte wie Tore, Rahmen, Barrieren und/oder Strukturen beziehen, insbesondere in denen eine Öffnung speziell dafür vorgesehen ist, um den Durchgang oder die Passage von Objekten und von Heißluft zu erlauben. Die Durchfahrt ist insbesondere groß genug zur Durchfahrt bzw. zum Durchführen von Pritschenwagen. Die Durchfahrt kann torbogenförmig bzw. (umgedreht) U-förmig ausgebildet sein. Die Durchfahrt kann auch neben der Vorrichtung angeordnet sein, ohne dass ein vollständiger Torbogen vorliegt.

Das Gestell bezeichnet insbesondere eine strukturelle Konstruktion, insbesondere Rahmenkonstruktion, Grundkörper und/oder Gerüst, die dazu dient, etwas zu stützen, zu halten und/oder zu positionieren. Das Gestell kann aus Metall, Holz oder Kunststoff hergestellt sein. Das Gestell bezieht sich insbesondere auf die grundlegende Struktur, die die Basis oder den Rahmen für die Montage von Komponenten, beispielsweise der Enteisungseinrichtung bzw. dem Heißluftgebläse, bildet. Das Gestell kann sich auch vorteilhaft dazu eignen, Komponenten der Enteisungseinrichtung aufzunehmen und/oder einzuhausen. Das Gestell kann wenigstens abschnittsweise verkleidet sein.

Die Enteisungseinrichtung weist das Heißluftgebläse auf. Insbesondere weist die Enteisungseinrichtung wenigstens das Prinzip des thermischen Enteisens, also mittels Hitze/Heißluft/Wärmestrahlung zum Schmelzen von Eis bzw. Schnee, auf. Die Enteisungseinrichtung kann auch weitere Prinzipien umsetzen, beispielsweise mechanisches Enteisen (z.B. Abstreifen und/oder Abkratzen von Eis/Schnee) und/oder chemisches Enteisen (z.B. mittels Enteisungsmittel). Die Enteisungseinrichtung kann neben dem Heißluftgebläse weitere Komponenten aufweisen, beispielsweise eine Steuerung insbesondere zur Steuerung des Heißluftgebläses, eine Kommunikationseinheit insbesondere zum Kommunizieren mit Bedienpersonal und/oder mit Pritschenwagen, und/oder dergleichen.

Das Heißluftgebläse ist insbesondere dazu ausgebildet, eine Heißluftströmung bereitzustellen. Das Heißluftgebläse kann Umgebungsluft ansaugen, diese erhitzen und insbesondere gerichtet als erhitzte Luft ausgeben. Das Ansaugen von Umgebungsluft kann so geschehen, dass ein Teil der erhitzten Luft, die bereits zum Enteisen verwendet wurde, angesaugt wird, um Energie zu sparen; insoweit kann eine Ansaugung auf die Durchfahrt gerichtet sein.

Das Heißluftgebläse kann elektrisch betrieben sein und/oder mit einem Brennstoff betrieben sein, beispielsweise mit Gasbrennstoff oder mit Flüssigbrennstoff. Die erhitzte Luft kann im Fall von der Verwendung von Brennstoff mit Abgas vermischt sein; das Abgas kann aber auch abseits von der erhitzten Luft abgeführt werden bzw. nicht auf die Pritschenwagen gerichtet sein.

Das Heißluftgebläse weist typischerweise eine Hauptströmungsrichtung auf, längs der die erhitzte Luft bzw. Heißluft/Heißluftströmung im Betrieb geblasen wird. Das Heißluftgebläse, insbesondere seine Hauptströmungsrichtung, ist bevorzugt auf die Durchfahrt gerichtet, also weist beispielsweise quer zu einer Durchfahrtrichtung der durch die Durchfahrt fahrenden Pritschenwagen, um Pritschenwagen zu enteisen. Das Heißluftgebläse kann an der Durchfahrt, vor der Durchfahrt und/oder hinter der Durchfahrt angeordnet sein. Das Heißluftgebläse kann seitlich und/oder oberhalb von der Durchfahrt angeordnet sein.

Die Enteisungseinrichtung kann mehrere Heißluftgebläse aufweisen. Beispielsweise können wenigstens zwei, vier, sechs oder mehr Heißluftgebläse vorgesehen sein. Vorteilhaft sind wenigstens neun Heißluftgebläse vorgesehen. Über mehrere Heißluftgebläse können mehrere heiße Luftströme bereitgestellt werden, um eine größere Fläche und/oder mit größerer Geschwindigkeit zu enteisen. Ebenfalls wird die Ausfallsicherheit gesteigert, sollte an einem Heißluftgebläse einmal ein Defekt auftreten. Auch kann so in einfacher weise die Leistung verändert werden, indem die mehreren Heißluftgebläse nur wahlweise betrieben werden.

Das Heißluftgebläse kann (bzw. die Heißluftgebläse können jeweils) einen Lüfter, insbesondere einen Radiallüfter, und/oder ein Heizelement, insbesondere ein elektrisches Heizelement und/oder ein PTC-Element, aufweisen. Ein Radiallüfter stellt in kompakter Bauweise einen einfach ausrichtbaren Luftstrom bereit, der zudem in seiner Geräuschentwicklung akzeptabel ist. Eine Saugseite vom Lüfter ist bevorzugt mit einem Gitter und/oder Filter versehen. In den Luftstrom eines Lüfters, oder auch Radiallüfters, kann in einfacher Weise das Heizelement eingebracht werden, besonders bevorzugt das PTC-Element. Denkbar sind aber auch andere elektrische Heizelemente und andere Lüfter als der Radiallüfter. PTC-Elemente sind im Stand der Technik bekannt. PTC-Elemente haben den Vorteil, dass sie im Grunde selbstregulierend sind und daher gut gegen Überhitzen geschützt sind.

Das Heißluftgebläse kann (bzw. die Heißluftgebläse können jeweils) eine Austrittsdüse bzw. Luftführungseinrichtung aufweisen. Die Austrittsdüse ist insbesondere zum Ausrichten der Heißluftströmung vorgesehen. Die Austrittsdüse kann zum Schutz gegen Hitze Metall aufweisen oder daraus hergestellt sein. Die Austrittsdüse ist bevorzugt an dem Lüfter festgelegt. Das Heizelement kann in der Austrittsdüse, zwischen der Austrittsdüse und dem Lüfter oder am Ausgang des Lüfters angeordnet sein.

Das Heißluftgebläse ist (bzw. die Heißluftgebläse sind) bevorzugt elektrisch betreibbar. Insbesondere kann zumindest im Wesentlichen oder ausschließlich aus elektrischer Energie bzw. Elektrizität der Heißluftstrom bereitgestellt werden. Das Heißluftgebläse kann eine elektrische Sicherung aufweisen, um einen Überstrom bzw. Brandgefahr zu vermeiden. Die Vorrichtung kann eine elektrische Sicherung für die Enteisungseinrichtung aufweisen. Zudem ist das Heißluftgebläse bzw. die Enteisungseinrichtung mit Vorteil über einen Schutzleiter geerdet bzw. über ein einen Schutzleiter bereitstellendes Zuleitungskabel erdbar bzw. geerdet, um die Sicherheit beim Betrieben zu steigern.

Wenigstens zwei der mehreren Heißluftgebläse können separat voneinander ansteuerbar sein, d.h. beispielsweise die Heißluftgebläse bzw. eine Steuerung ist entsprechend konfiguriert, um die jeweiligen Heißluftgebläse getrennt voneinander anzusteuern. Insbesondere im Fall von elektrischer Betreibbarkeit gelingt das separate Ansteuern der Heißluftgebläse in einfacher Weise und mit Vorteil zum Energiesparen und/oder zum Bereitstellen eines an den jeweiligen Pritschenwagen angepassten Heißluftstroms.

Es kann eine Energieversorgungseinrichtung für die Enteisungseinrichtung mit einem Versorgungsanschluss zum Einspeisen von Elektrizität in die Vorrichtung vorgesehen sein. Insbesondere ist ein Betreiben mittels Wechselstrom, vorzugsweise Dreiphasen-Wechselstrom, vorzugsweise bei einer Frequenz von 50 Hz oder 60 Hz, vorgesehen. Beispielsweise kann eine Betriebsspannung von wenigstens 100 Volt, 400 Volt oder mehr vorteilhaft vorgesehen sein. Der Versorgungsanschluss kann ein Steckanschluss für ein Netzkabel sein. Der Versorgungsanschluss ist typischerweise spritzwassergeschützt an der Vorrichtung angeordnet. Die Energieversorgungseinrichtung kann einen Energiespeicher wie einen Akkumulator oder eine Batterie aufweisen. Die Energieversorgungseinrichtung und/oder die Enteisungseinrichtung kann eine Nennleistung von wenigstens 2,5 kW, 5 kW, 10 kW oder 15 kW aufweisen. Die Nennleistung bezieht sich dabei beispielsweise auf die gesamte Vorrichtung oder auf einzelne Komponenten der Vorrichtung. Beispielsweise bezieht sich die Nennleistung auf ein einzelnes Heißluftgebläse, auf eine Gruppe von Heißluftgebläsen, oder auf alle Heißluftgebläse. Bei vergleichsweise hoher Leistung, beispielsweise ab 5 kW, können auch mehrere Versorgungsanschlüsse oder auch Energieversorgungseinrichtungen vorgesehen sein.

Das Heißluftgebläse ist in manchen Ausführungsformen zur Verbrennung von Brennstoff ausgebildet. Im Fall von der Verwendung von Brennstoff kann die Energieversorgungseinrichtung für die Enteisungseinrichtung auch einen Brennstofftank und/oder einen Anschluss zum Einspeisen von Brennstoff aufweisen.

Unter dem Pritschenwagen, auch Dolly bzw. Flughafen-Dolly genannt, ist typischerweise ein Fahrzeug bzw. ein Fahrzeuganhänger zu verstehen, der sich zum Transport von Luftfrachtcontainern, beispielsweise ULD-Containern und/oder ULD-Paletten, eignet. "ULD" steht für "Unit Load Device". Bei dem Pritschenwagen handelt es sich um ein Bodenabfertigungsgerät an einem Flughafen. Unter Luftfrachtcontainern sind insbesondere Paletten und/oder Container zu verstehen, die beispielsweise verwendet werden können, um Gepäck, Frachtgut und Post auf Flugzeuge, insbesondere Großraumflugzeuge und/oder Schmalrumpfflugzeuge, zu laden. Pritschenwagen für Luftfrachtcontainer, also insbesondere Flughafen-Dollies für ULD-Container bzw. Paletten, sind Flachbett-Wagen und/oder Plattformen mit mehreren Rädern, Rollenstangen oder Kugellagern, die über die Oberseite hinausragen, um das Be- und Entladen von der Luftfrachtcontainer zu erleichtern bzw. zu ermöglichen. Da Luftfrachtcontainer daher auf den Pritschenwagen beweglich gelagert sind, beispielsweise auf Kugellagern ruhen, sind diese Pritschenwagen insbesondere mit Scharnieren bzw. Schlössern ausgestattet, um die Position der Luftfrachtcontainer beim Bewegen der Pritschenwagen zu sichern.

Die Luftfahrtindustrie hat Luftfrachtcontainer als leichte Container bzw. Stützplattformen eingeführt, die in Flugzeuge verladen werden und mit ihrer Ladung fliegen können. Sie müssen geringstmögliches Gewicht haben und verfügen daher nicht über Räder oder eine starke Grundstruktur. Außerdem haben Luftfrachtcontainer strenge Abmessungsstandards, die sich an den Abmessungen eines Flugzeugladeraums orientieren. Daher werden Pritschenwagen entwickelt, um die Abmessungen des Luftfrachtcontainers, die Position der Scharniere/Halterungen, die schwache allgemeine physische Stärke und den Transportbedarf zu ergänzen.

Pritschenwagen haben insbesondere eingebaute Rollen auf dem Deck, um die Bewegung von Luftfrachtcontainern zu unterstützen. Die Rollen können motorisch betrieben sein, beispielsweise zum vorwärts bzw. rückwärts und/oder seitwärts gerichteten Bewegen. Pritschenwagen können über zwei Sätze motorgetriebener Rollen verfügen, von denen ein Satz den Luftfrachtcontainer vorwärts und rückwärts und der andere nach links und rechts bewegen kann. Eine präzise Bewegung ist sinnvoll, um den Schwerpunkt des Luftfrachtcontainers auf die Mitte des Pritschenwagens auszurichten, um ein Umkippen zu vermeiden. Pritschenwagen können eine drehbare Plattform aufweisen, um die Luftfrachtcontainer in die richtige Ausrichtung zu drehen. Die Plattform kann motorisch drehbar ausgebildet sein. Pritschenwagen haben insbesondere Bremsen, die die Räder des Pritschenwagens verzögern bzw. blockieren können, beispielsweise wenn sich eine Schleppstange des Pritschenwagens in der geparkten (vertikalen) Ausrichtung befindet, und die Pritschenwagen-Räder automatisch lösen, wenn sich die Schleppstange in der (horizontalen) Ausrichtung befindet.

Es kann vorgesehen sein, dass mehrere der Heißluftgebläse längs einer Durchfahrtrichtung verteilt angeordnet sind, das Gestell sich nach oben verjüngt und/oder das Gestell höhenverstellbar ausgebildet ist. Die Heißluftgebläse können in verschiedenen Höhen und/oder in verschiedenen Abschnitten entlang der Durchfahrtrichtung angeordnet sein, um möglichst viel Fläche von den Pritschenwagen abzudecken bzw. eine lange Zeitdauer auf die Pritschenwagen gerichtet zu sein. Indem das Gestell sich nach oben zuspitzt und/oder zur Durchfahrt geneigt ausgebildet ist, kann platzsparender und wirkungsvoller enteist werden. Auch kann so ein sicherer Stand der Vorrichtung erreicht werden. Beispielsweise ist die Vorrichtung längs einer Durchfahrtrichtung gesehen in einem bodennahen Bereich länger bzw. bereiter als in einem weiter vom Boden entfernteren Bereich. So wird auch der Schwerpunkt möglichst weit unten gehalten.

Wenn das Gestell an die Höhe durchfahrender Pritschenwagen anpassbar ist, kann platzsparender und wirkungsvoller enteist werden. Beispielsweise kann eine Höhenverstellmechanik vorgesehen sein, die manuell oder motorisch betrieben ist; es kann aber auch explizit vorgesehen sein, dass die Vorrichtung nicht höhenverstellbar ausgebildet ist.

Vorzugsweise weist das Gestell zur Bereitstellung der Durchfahrt einen ersten Seitenabschnitt oder mehrere davon auf. Es kann/können ein zweiter Seitenabschnitt oder mehrere davon vorgesehen sein. Der zweite Seitenabschnitt verläuft bevorzugt zumindest im Wesentlichen parallel zum ersten Seitenabschnitt. Es kann ein zumindest im Wesentlichen quer zum ersten und/oder zum zweiten Seitenabschnitt ausgerichteter und/oder vom ersten und/oder zweiten Seitenabschnitt ausgehender Dachabschnitt vorgesehen sein oder es können mehrere davon vorgesehen sein. Die Abschnitte, soweit vorgesehen, sind typischerweise aneinander festgelegt und/oder einstückig miteinander ausgebildet. Es ist denkbar, dass die Abschnitte, soweit vorgesehen, lösbar aneinander festgelegt sind. Es ist denkbar, dass nur der erste Seitenabschnitt und gegebenenfalls der Dachabschnitt vorgesehen sind, insbesondere so dass der Dachabschnitt auskragend bzw. die Durchfahrt überragend ausgebildet ist. Es ist auch denkbar, dass eine T-Form ausgebildet wird, indem zwei Dachabschnitte vorgesehen sind, die insbesondere voneinander weg weisend am ersten Seitenabschnitt ausgebildet sind. So kann beidseitig am ersten Seitenabschnitt enteist werden bzw. jeweils eine Durchfahrt ausgebildet sein. Ein besonderer Fall sieht vor, dass die Durchfahrt an zumindest einer Seite seitlich vom ersten Seitenabschnitt vorgesehen ist. Gegebenenfalls sind weder der Dachabschnitt noch der zweite Seitenabschnitt vorgesehen.

Es ist möglich, dass der Dachabschnitt an dem ersten Seitenabschnitt und/oder an dem zweiten Seitenabschnitt festgelegt ist, insbesondere so dass die Enteisungseinrichtung bzw. das Heißluftgebläse am Dachabschnitt zum Boden fest beabstandet ist. Beispielsweise ist der Dachabschnitt nicht-höhenverstellbar zu dem oder den Seitenabschnitten angeordnet.

Erster Seitenabschnitt, zweiter Seitenabschnitt und Dachabschnitt können zusammen eine Torbogenform und/oder U-Form ausbilden. Es können die Seitenabschnitte U-Schenkel und der Dachabschnitt den U-Steg bilden. Bevorzugt weisen für eine umgedrehte U-Form die U-Schenkel zum Untergrund bzw. Boden. Insgesamt wird eine hinsichtlich unterschiedlicher Ausgestaltungen von Pritschenwagen sehr flexible und zudem platzsparende Vorrichtung geschaffen. Auch die Mobilität der Vorrichtung ist vorteilhaft verbessert.

Eine Austrittsdüse der Enteisungseinrichtung, insbesondere des Heißluftgebläses bzw. eines jeweiligen Heißluftgebläses, kann wenigstens teilweise, zum Boden und/oder zum jeweils anderen Seitenabschnitt weisend ausgerichtet sein. Insbesondere ist die Austrittsdüse zumindest im Wesentlichen nach unten gerichtet bzw. weist in Richtung Boden. So kann besonders vorteilhaft eine Durchfahrt von Pritschenwagen erfasst werden, um zu enteisen.

Vorzugsweise weist die Durchfahrt eine Breite von wenigstens 1,5 m oder 2 m auf. Die Breite der Durchfahrt kann eine Breite von höchstens 2 m, 2,5 m oder 3 m aufweisen. Die Breite wird typischerweise als auskragende Länge des Dachabschnitts und/oder als der Abstand zwischen den Seitenabschnitten bestimmt. Die Durchfahrt kann eine Höhe von wenigstens 1,5 m oder 2 m aufweisen. Die Höhe der Durchfahrt kann eine Höhe von höchstens 2 m oder 2,5 m oder 3 m aufweisen. Die Höhe wird typischerweise als Abstand des Dachabschnitts zum Boden und/oder als Höhe des ersten Seitenabschnitts bestimmt. Mit den genannten Abmaßen kann ein Pritschenwagen besonders effektiv enteist werden, während die Vorrichtung selbst kompakt gebaut werden kann und optional transportabel ist.

Die Enteisungseinrichtung kann, wenigstens teilweise, auf einem, mehreren oder allen von dem ersten Seitenabschnitt, dem zweiten Seitenabschnitt und/oder dem Dachabschnitt angeordnet sein bzw. daran festgelegt sein. Besonders vorteilhaft befindet sich die Enteisungseinrichtung verteilt auf wenigstens zwei oder allen der Abschnitte bzw. ist daran festgelegt, um Pritschenwagen aus mehreren Richtungen enteisen zu können. Es kann hierzu einem einzelnen Abschnitt jeweils ein Heißluftgebläse zugeordnet sein. Beispielsweise können sich auf einem jeweiligen Abschnitt ein, zwei, drei oder mehr Heißluftgebläse befinden.

Die Enteisungseinrichtung kann, wenigstens teilweise, verstellbar ausgebildet sein. Beispielsweise kann die Enteisungseinrichtung, wenigstens teilweise, an dem ersten Seitenabschnitt, dem zweiten Seitenabschnitt und/oder dem Dachabschnitt verstellbar, insbesondere längs des jeweiligen Abschnitts verschiebbar und/oder um diesen schwenkbar, angeordnet sein. Teile der Enteisungseinrichtung, beispielsweise ein oder mehrere einzelne Heißluftgebläse, können verstellbar sein während andere nicht verstellbar sind bzw. fix ausgerichtet sind. Es kann eine Schiene am Gestell vorgesehen sein, längs der die Enteisungseinrichtung bzw. das/die Heißluftgebläse verstellt bzw. verfahren werden kann/können. Besonders bevorzugt fällt unter "verstellbar", dass eine Steuerung die Enteisungseinrichtung verstellen kann. Verstellbar bedeutet insbesondere, dass eine Orientierung (beispielsweise durch Verschieben bzw. Verschwenken) händisch und/oder motorisiert verstellt werden kann. So kann adaptiv auf verschiedene Pritschenwagen und/oder Umgebungsbedingungen reagiert werden. Damit wird die Vorrichtung besonders flexibel. Insbesondere in Verbindung damit, dass die Vorrichtung, insbesondere das Gestell und/oder der Dachabschnitt, höhenverstellbar sein kann, ist die Verstellbarkeit der Enteisungseinrichtung besonders vorteilhaft, um Flexibilität zu schaffen.

Die Vorrichtung, insbesondere die Enteisungseinrichtung, kann mit Sensorik ausgestattet sein. Sensorik dient vorteilhaft zum Erfassen von Umgebungsbedingungen, so dass in Abhängigkeit von sensorisch Erfassten Informationen effektiv, also möglichst wirkungsvoll, und effizient, also möglichst energiesparend, enteist werden kann. Beispielsweise kann vorgesehen sein, dass ein durchfahrender Pritschenwagen nur dann enteist wird, wenn der Pritschenwagen nass ist, mit Schnee und/oder Eis bedeckt ist, und/oder wenn die Umgebungstemperatur unterhalb von einem Grenzwert (beispielsweise 3°C) liegt.

Es kann eine erste Sensorik zum Erkennen von Wasser, insbesondere Eis oder Schnee, insbesondere zum Erkennen einer Menge, eines Orts und/oder eines Aggregatzustands des Wassers vorgesehen sein. Die erste Sensorik kann exemplarisch eine Kamera, einen Temperatursensor, einen Feuchtigkeitssensor und/oder eine Thermographie-Einrichtung aufweisen, womit sich vereiste, nasse oder kalte Bereiche gut erkennen lassen. Beispielsweise kann eine Schneehöhe, ein Vereisungsgrad und/oder eine Eisdecke erkannt werden. Es ist denkbar, dass eine Dicke einer Eisdecke erkannt werden kann.

Es kann eine zweite Sensorik zum Erfassen von einer Temperatur, insbesondere einer Umgebungstemperatur und/oder einer Temperatur eines Pritschenwagens, vorgesehen sein. Die zweite Sensorik kann exemplarisch eine Kamera, einen Temperatursensor, eine Thermographie-Einrichtung und/oder eine Kommunikationsschnittstelle zum Abruf von Wetterinformationen aufweisen, womit sich Temperaturen gut erfassen bzw. erhalten lassen.

Es kann eine dritte Sensorik oder mehrere davon vorgesehen sein. Beispielsweise weist die dritte Sensorik eine. Näherungssensorik auf, die insbesondere zum Erfassen von Pritschenwagen ausgebildet ist. Die dritte Sensorik kann näherungssensitiv sein, beispielsweise wenigstens gegenüber Pritschenwagen. Die dritte Sensorik kann alternativ oder ergänzend zum Erfassen von einem Typ, einer Form, einer Verformung bzw. Beschädigung, und/oder einer Position eines Pritschenwagens ausgebildet sein. Die dritte Sensorik kann beispielsweise einen Hersteller bzw. Einsatzzweck eines Pritschenwagens erfassen. Beispielsweise kann ein Identifikationsmerkmal, z.B. ein Barcode und/oder QR-Code, eines Pritschenwagens sensorisch erfasst werden. Die dritte Sensorik kann exemplarisch einen Lidar-Sensor, einen 3D-Sensor, eine Kamera oder mehrere Kameras, insbesondere Stereo-Kamera(s), einen Radarsensor, einen Ultraschallsensor, eine Lichtschranke oder Ähnliches aufweisen.

Insbesondere kann eine Steuerung vorgesehen sein. Die Steuerung ist bevorzugt zur Steuerung der Enteisungseinrichtung in Abhängigkeit von einer Nutzereingabe und/oder in Abhängigkeit von Signalen von einer oder mehreren der hier beschriebenen Sensoriken ausgebildet. Die Steuerung kann Teil der Enteisungseinrichtung sein oder separat davon ausgebildet sein, insbesondere als Teil der Vorrichtung. Die Steuerung kann eine Kommunikationsschnittstelle aufweisen, die insbesondere zur internetbasierten Kommunikation ausgebildet ist. Die Steuerung kann zur Standorterfassung ausgebildet sein, beispielsweise um den Standort der Steuerung bzw. Vorrichtung an eine Zentrale zu melden. Die Steuerung kann programmierbar ausgebildet sein, beispielsweise um Betriebszeiten und/oder Betriebsmodi zu programmieren. Die Steuerung kann auch zur Überwachung der Vorrichtung ausgebildet sein, beispielsweise zur Überwachung einer Temperatur, um Überhitzung zu vermeiden und/oder einen Betrieb bei zu hohen Temperaturen, insbesondere Umgebungstemperaturen, zu vermeiden. Die Steuerung kann ein Eingabegerät (z.B. Tasten, Touchscreen, etc.) zur Entgegennahme von Nutzereingaben aufweisen. Die Steuerung kann ein Display zum Anzeigen von betriebsrelevanten Informationen aufweisen.

Mit besonderem Vorteil kann die Steuerung eingerichtet sein, die Enteisungseinrichtung im Betrieb der Enteisungseinrichtung zu verstellen. Beispielsweise kann mit dem Verstellen eine Richtung einer Heißluftströmung und/oder eine Richtung einer Strahlung, beispielsweise Wärmestrahlung und/oder Infrarotstrahlung, verändert werden. Es ist auch möglich, dass zwei oder mehr der Heizeinrichtungen separat voneinander verstellbar sind. Das Verstellen kann derart erfolgen, dass die Enteisungseinrichtung einem Pritschenwagen zum Enteisen folgt. Insoweit wird auch eine vorteilhafte Zusammenwirkung mit einer oder mehrerer der hier beschriebenen Sensoriken erreicht.

Falls Pritschenwagen zusammen mit Luftfrachtcontainern enteist werden, was möglich ist, kann mittels verstellbarer Enteisungseinrichtung flexibel auf Konturen eines Pritschenwagens bzw. Luftfrachtcontainers reagiert werden.

Insbesondere ist die Vorrichtung, die Enteisungseinrichtung und/oder die Steuerung spritzwassergeschützt und/oder zum Aufstellen im Außenbereich ausgebildet und/oder weist wenigstens eine Dichtung auf. Beispielsweise kann die Vorrichtung eine Überdachung aufweisen, die oberhalb von den Teilen der Enteisungseinrichtung und/oder der Steuerung angeordnet ist. Die Vorrichtung kann auch ein Schutzgehäuse aufweisen, beispielsweise ein abgedichtetes Gehäuse, insbesondere für die Steuerung und/oder Steuerungskomponenten der Enteisungseinrichtung.

Es wird ferner eine Anordnung vorgeschlagen, die die Vorrichtung und wenigstens einen Pritschenwagen aufweist. Der Pritschenwagen ist vorteilhaft zum Transport von Luftfrachtcontainern bzw. ULD-Containern ausgebildet. Die Anordnung dient als vorteilhafte Systemlösung, beispielsweise für Betreiber von oder Akteure an Flughäfen.

Vorgeschlagen wird ferner eine Verwendung der hier beschriebenen Vorrichtung zum Enteisen von Pritschenwagen für den Transport von Luftfrachtcontainern, insbesondere an einem Logistik-Hub und/oder einem Flughafen.

Es wird ferner eine Verwendung einer Vorrichtung vorgeschlagen, die wie vorliegend beschrieben ausgebildet ist und/oder oder ein zu einer Durchfahrt für Pritschenwagen weisendes Heißluftgebläse aufweist. Die Verwendung ist vorgesehen zum Enteisen von Pritschenwagen an einem Logistik-Hub und/oder einem Flughafen. Die Pritschenwagen sind vorteilhaft zum Transport von Luftfrachtcontainern bzw. ULD-Containern ausgebildet. Die Verwendung stellt eine vorteilhafte Neuerung an Logistik-Hubs bzw. Flughäfen dar, um einen reibungslosen Winterbetrieb von Pritschenwagen sicherzustellen.

Es wird ferner ein Verfahren zum Enteisen von Pritschenwagen vorgeschlagen. Das Verfahren sieht insbesondere vor, dass das Enteisen mittels einer Vorrichtung erfolgt, die wie vorliegend beschrieben ausgebildet ist und/oder ein zu einer Durchfahrt für Pritschenwagen weisendes Heißluftgebläse aufweist. Bei dem Verfahren sind vorteilhaft einer oder mehrerer der folgenden Schritte vorgesehen, bevorzugt in der angegebenen Reihenfolge: Bereitstellen eines Pritschenwagens oder mehrerer Pritschenwagen, insbesondere der/die vereist ist/sind. Bereitstellen einer zu einer/der Durchfahrt für Pritschenwagen weisenden Heißluftströmung und/oder Wärmestrahlung. Bewegen des Pritschenwagens durch die Durchfahrt; der Pritschenwagen oder mehrere Pritschenwagen können auch von einem Zugfahrzeug durch die Durchfahrt bzw. an der Durchfahrt vorbei gezogen werden. Steuern, insbesondere Aktivieren, Deaktivieren oder Verändern, der Heißluftströmung und/oder Wärmestrahlung in Abhängigkeit von einer Nutzereingabe und/oder in Abhängigkeit von Signalen von einer oder mehreren Sensoriken. Das Bereitstellen der Heißluftströmung und das Bewegen des Pritschenwagens kann auch gleichzeitig geschehen. Es kann auch erst der Pritschenwagen bewegt werden und dann die Heißluftströmung bereitgestellt werden. Die Heißluftströmung wird insbesondere so lange bereitgestellt, wie der Pritschenwagen sich im Bereich der Heißluftströmung und/oder der Durchfahrt befindet.

Das Verfahren kann dadurch weitergebildet werden, dass der Pritschenwagen, insbesondere wenigstens zwei, drei oder mehr insbesondere aneinander gekoppelte Pritschenwagen, gezogen werden. Der oder die Pritschenwagen kann/können von einer Zugmaschine gezogen werden. Die Zugmaschine kann den bzw. die Pritschenwagen durch die Durchfahrt ziehen. Die Zugmaschine kann ferngesteuert und/oder unbemannt betrieben sein. Dabei kann es sein, dass die Heißluftströmung und/oder Wärmestrahlung erst dann aktiviert wird, wenn die Zugmaschine die Durchfahrt passiert hat. So kann ein besonders schnelles und relativ energiesparendes Enteisen erfolgen.

Alternativ oder ergänzend kann vorgesehen sein, dass der bzw. die Pritschenwagen auf einem durch die Durchfahrt führenden Band bewegt wird/werden. Das Band kann den bzw. die Pritschenwagen fördern. Das Band kann ein Förderband sein und/oder ein Förderelement, beispielsweise eine oder mehrere Förderrollen, aufweisen. Es ist auch möglich, dass der bzw. die Pritschenwagen längs des Bands gezogen wird/werden, beispielsweise durch eine/die Zugmaschine und/oder durch eine Winde oder dergleichen.

Es kann vorgesehen sein, dass der jeweilige Pritschenwagen beim Bewegen einen Luftfrachtcontainer trägt. Insoweit kann auch ein Enteisen des Luftfrachtcontainers auf dem Pritschenwagen vorgesehen sein. Es ist aber auch möglich, dass ein Luftfrachtcontainer im Grunde allein bzw. ohne Pritschenwagen enteist wird, der beispielsweise mittels Band und/oder Winde durch die Durchfahrt bewegt wird.

Im Rahmen der Offenbarung steht die Abkürzung "bzw." als eine Kurzform für "beziehungsweise" und soll grundsätzlich alternative, im Grunde gleichwertige und/oder synonyme Merkmale oder Begriffe angeben, um die Idee bzw. den Sinn einer Merkmals- oder Begriffsverwendung näher zu bringen. "Beziehungsweise" kann stets mit "und/oder" ersetzt werden.

Nachfolgend wird die Erfindung anhand eines bevorzugten Ausführungsbeispiels unter Bezugnahme auf die Zeichnungen weiter im Detail erläutert.

In den Zeichnungen zeigen
- Fig. 1: eine transportable Vorrichtung zum Enteisen von Pritschenwagen in einer perspektivischen Ansicht,
- Fig. 2: die Vorrichtung aus Fig. 1 in einer weiteren perspektivischen Ansicht und zusammen mit einem Pritschenwagen,
- Fig. 3: einen Schleppverband aus einer Zugmaschine und drei Pritschenwagen an einem Flughafen, und
- Fig. 4: eine Anordnung mit einer Vorrichtung und mehreren Pritschenwagen für Luftfrachtcontainer in einer perspektivischen Ansicht.

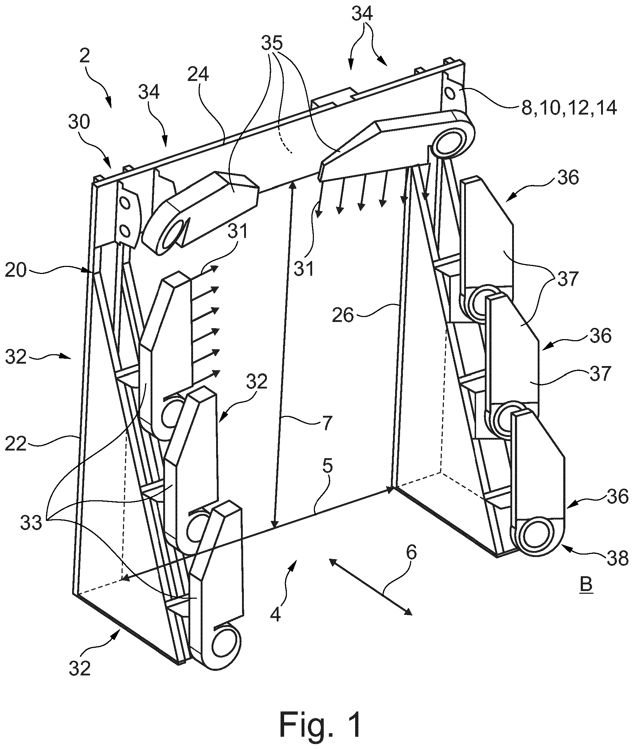

Fig. 1 zeigt eine transportable Vorrichtung 2 zum Enteisen von Pritschenwagen P, die für den Transport von Luftfrachtcontainern L vorgesehen sind. Die Vorrichtung 2 weist eine Durchfahrt 4 für die Pritschenwagen P, ein verkleidetes Gestell 20 und eine an dem Gestell 20 angeordnete Enteisungseinrichtung 30 mit mehreren jeweils zur Durchfahrt 22 weisenden Heißluftgebläsen 32, 34, 36 auf. Die Heißluftgebläse 32, 34, 36 weisen jeweils einen Radiallüfter, PTC-Elemente und eine Austrittsdüse 33, 35, 37 auf. Es handelt sich um elektrisch betriebene Heißluftgebläse 32, 34, 36, die unabhängig bzw. separat voneinander ansteuerbar sind. Schematisch ist dargestellt, dass zwei Heizlüfter 32, 34 jeweils eine Heißluftströmung 31 bereitstellen.

Eine Energieversorgungseinrichtung 38 für die Enteisungseinrichtung 30 stellt einen Versorgungsanschluss zum Einspeisen von Elektrizität bereit. An dem Versorgungsanschluss kann ein Netzkabel bzw. ein Stromkabel angeschlossen werden. Beispielsweise eignet sich ein "Starkstrom"-Anschluss bzw. ein Dreiphasen-Wechselstromanschluss vorliegend zur Bereitstellung ausreichender Leistung. Die Betriebsspannung liegt vorzugsweise im Bereich zwischen 100 und 400 Volt. Eine Betriebsspannung von mehr als 100 Volt, 200 Volt oder 400 Volt ist möglich. Die Nennleistung der Vorrichtung 2, mit der Heißluftströmungen 31 bereitgestellt werden können, beträgt wenigstens 2,5 kW, bevorzugt 5 kW oder mehr. Die Enteisungseinrichtung 30 ist insbesondere regelbar, beispielsweise in Stufen oder stufenlos, um die Wärmeabgabe zu regeln, insbesondere mittels einer später näher beschriebenen Steuerung 8.

Die mehreren Heißluftgebläse 32, 34, 36 sind längs einer Durchfahrtrichtung 6 und ebenfalls quer dazu bzw. in Höhenrichtung verteilt angeordnet. Das Gestell 20 verjüngt sich nach oben hin, um die Standfestigkeit zu verbessern bzw. die Neigung zum Umkippen zu verringern. Vorliegend ist die Vorrichtung 2 längs der Durchfahrtrichtung 6 gesehen in einem bodennahen Bereich länger als in einem weiter vom Boden B entfernteren Bereich, um einen bodennahen Schwerpunkt zu erhalten.

Insbesondere kann das Gestell 20 höhenverstellbar ausgebildet sein, um die Durchfahrthöhe zu verringern oder zu erhöhen. Vorliegend weist das Gestell 20 eine Rahmenkonstruktion auf, beispielsweise bereitgestellt durch wenigstens ein Metallprofil, insbesondere Aluminiumprofil.

Die Heißluftgebläse 32, 34, 36 können am Gestell 20, insbesondere mittels der später näher beschriebenen Steuerung 8, verstellt werden, beispielsweise um eine Richtung der Heißluftströmung 31 zu verändern.

Das Gestell 20 weist zur Bereitstellung der Durchfahrt 4 einen ersten Seitenabschnitt 22 mit drei Heißluftgebläsen 32, einen quer zum ersten Seitenabschnitt 22 ausgerichteten und vom ersten Seitenabschnitt 22 ausgehenden Dachabschnitt 24 mit drei Heißluftgebläsen 34 und einen zweiten Seitenabschnitt 26 mit drei Heißluftgebläsen 36 auf. Der zweite Seitenabschnitt 26 ist im Wesentlichen parallel zum ersten Seitenabschnitt 22 angeordnet. Die Abschnitte 32, 34, 36 sind torbogenförmig bzw. umgedreht U-förmig angeordnet. Die Abschnitte 32, 34, 36 sind aneinander festgelegt, insbesondere lösbar miteinander verbunden, beispielsweise verschraubt und/oder lösbar aneinander verrastet.

Die Heißluftgebläse 32, 34, 36 können verstellt bzw. bewegt werden, genauer gesagt verschoben und/oder verschwenkt werden. Eine oder mehrere der Austrittsdüsen 33, 35, 37 können dabei ausgerichtet werden, beispielsweise um sich an Pritschenwagen P individuell anzupassen und/oder diesem im Betrieb zu folgen.

Die Heißluftgebläse 34 können längs des Dachabschnitts 24 verschoben werden und/oder um den bzw. am Dachabschnitt 24 verschwenkt werden. Zusammen mit dem Dachabschnitt 24 kann optional eine Höhenverstellung erfolgen, was letztlich auch einem Verstellen der Heißluftgebläse 34 gleichkommen mag.

Die Heißluftgebläse 32 und 36 können längs des jeweiligen Seitenabschnitts 22 bzw. 26 verschoben werden und/oder um den bzw. am Seitenabschnitts 22 bzw. 26 verschwenkt werden. Zusammen mit dem Seitenabschnitt 22 bzw. 26 kann optional eine Höhenverstellung erfolgen, was letztlich auch einem Verstellen der Heißluftgebläse 32 und 36 gleichkommen mag.

Denkbar ist es, dass die Enteisungseinrichtung 30, insbesondere die Heißluftgebläse 32, 34, 36, auf Schienen am Gestell 20 insbesondere motorisch verstellt werden können.

Das Gestell 20 steht direkt auf dem Boden B auf. Die Vorrichtung 2 kann verschoben werden und ist insoweit transportabel bzw. mobil. Die Vorrichtung 1 ist insbesondere zum Abstellen bzw. Aufstellen auf einem im Wesentlichen flachen, befestigten Untergrund ausgebildet. Beispielsweise eignet sich ein asphaltierter bzw. betonierter Untergrund. Die Vorrichtung 1 muss nicht unbedingt im Boden B verankert oder befestigt werden.

Die Austrittsdüsen 35 sind im Wesentlichen zum Boden B ausgerichtet und weisen bevorzugt möglichst quer zur Durchfahrtrichtung 6, um ein Umkippen der Vorrichtung 2 durch den vom Luftaustritt entstehenden Impuls zu vermeiden. Die Austrittsdüsen 33 bzw. 37 sind im Wesentlichen zum jeweils anderen Seitenabschnitt 26 bzw. 22 und/oder im Wesentlichen längs zum Boden B weisend ausgerichtet.

Die Enteisungseinrichtung 30 ist auf allen von dem ersten Seitenabschnitt 22, dem zweiten Seitenabschnitt 26 und/oder dem Dachabschnitt 24 angeordnet, indem jeweilige Heißluftgebläse 32, 34, 36 an den jeweiligen Abschnitten 22, 24 bzw. 26 festgelegt sind.

Die Vorrichtung 2 weist eine Steuerung 8 zur Steuerung der Enteisungseinrichtung 30 auf. Die Steuerung 8 weist eine Kommunikationseinheit auf, die beispielsweise über Mobilfunk und/oder über lokalen Funk kommunizieren kann. Die Kommunikationseinheit kann wenigstens unidirektional kommunizieren, d.h. Informationen empfangen oder versenden. Insbesondere kann die Kommunikationseinheit bidirektional kommunizieren, d.h. Informationen empfangen und versenden. Die Steuerung 8 ist programmierbar ausgebildet.

Die Steuerung 8 kann die Vorrichtung 2 selbst, insbesondere die Enteisungseinrichtung 30, in Abhängigkeit von einer Nutzereingabe steuern. Die Nutzereingabe kann direkt an der Steuerung 8 und/oder aus der Ferne bzw. kabellos bzw. über die Kommunikationseinheit vorgenommen werden. Die Steuerung 8 kann auch in Abhängigkeit von Signalen von Sensoriken 10, 12, 14 steuern.

Es ist denkbar, dass die Steuerung 8 von einem Fahrzeug bedient wird, das einen oder mehrere von den Pritschenwagen P zieht und damit durch die Durchfahrt 4 fahren soll.

Beispielsweise kann die Steuerung 8 eine Anpassung der Vorrichtung 2 bzw. Enteisungseinrichtung 30 bei unterschiedlichen durchfahrenden Pritschenwagen P vornehmen. Es kann beispielsweise eine Temperatur und/oder Leistung einer bereitgestellten Heißluftströmung 31 daran angepasst werden, welcher Pritschenwagen P (d.h. welcher Typ) durchfährt, welche Umgebungstemperatur herrscht und/oder welche Menge an Schnee/Eis am Pritschenwagen P vorliegt. Die Steuerung 8 kann die Enteisungseinrichtung 30 regeln. Es kann auch ein Ablauf programmiert werden. Bei einer höhenverstellbaren Vorrichtung 2 bzw. einem solchen Gestell 20 kann auch die Höhenverstellung in Abhängigkeit von Sensoriken 10, 12, 14 und/oder durchfahrenden Pritschenwagen P durchgeführt werden. Auch die Austrittsdüsen 33, 35, 37 können von der Steuerung 8 angesteuert und/oder bewegt werden.

Die Vorrichtung 2 weist ferner eine erste Sensorik 10 zum Erkennen von Wasser, genauer gesagt Eis oder Schnee, insbesondere zum Erkennen einer Menge, eines Orts und/oder eines Aggregatzustands des Wassers, auf. Zudem ist eine zweite Sensorik 12 zum Erfassen einer Temperatur, insbesondere einer Umgebungstemperatur und/oder einer Temperatur eines Pritschenwagens P, vorgesehen. Ferner ist eine dritte Sensorik 14 zum Erfassen von Pritschenwagen P vorgesehen, d.h. z.B. um zu erfassen, ob sich ein Pritschenwagen P in der Durchfahrt 4 befindet. Die dritte Sensorik ist näherungssensitiv ausgebildet und kann damit insbesondere Pritschenwagen P erfassen bzw. erkennen. Die dritte Sensorik 14 kann auch den Typ, die Form und/oder Beschädigungen eines Pritschenwagens P erkennen. Die dritte Sensorik 14 kann auch die Position eines Pritschenwagens P in der Durchfahrt 4 erkennen. Die dritte Sensorik 14 weist wenigstens eine Kamera auf.

Die Steuerung 8 ist eingerichtet, die Enteisungseinrichtung 30 in deren Betrieb und in Abhängigkeit von einer oder mehrerer der Sensoriken 10, 12, 14 zu verstellen. Beispielsweise kann die Enteisungseinrichtung 30 in Abhängigkeit von Typ, Form und/oder Position eines Pritschenwagens verstellt werden. Die Heißluftgebläse 32, 34, 36 können individuell bzw. separat verstellt werden.

Die Durchfahrt 4 weist eine Breite 5 von 2 m ± 1 m und/oder eine Höhe 7 von 2,5 m ± 1 m auf. Die Figuren sind hinsichtlich Breite 5 und Höhe 7 nicht maßstabsgetreu.

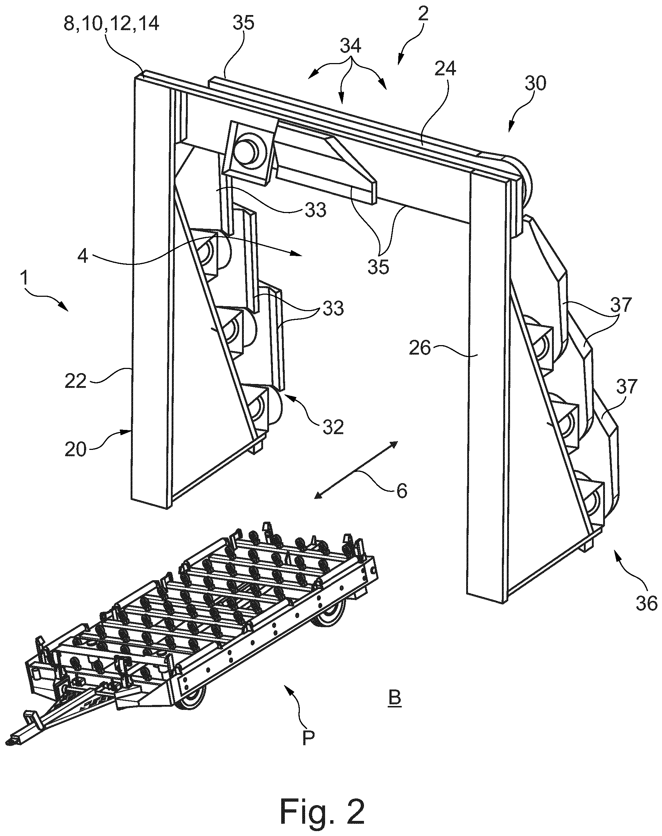

Fig. 2 zeigt eine Anordnung 1 mit der schon in Fig. 1 gezeigten Vorrichtung 2 und mit einem Pritschenwagen P, der zum Transport von Luftfrachtcontainern, bevorzugt ULD-Containern, ausgebildet ist. Die Anordnung 1 befindet sich an einem Logistik-Hub bzw. an einem Flughafen. Der Pritschenwagen 2 ist angeordnet, um längs der Durchfahrtrichtung 6 durch die Durchfahrt 4 bewegt zu werden. Dann kann die Enteisungseinrichtung 30 Heißluftströmungen auf den Pritschenwagen P einströmen lassen, um den Pritschenwagen P zu enteisen. Insoweit ist auch eine Verwendung der Vorrichtung 2 zum Enteisen von Pritschenwagen P gezeigt.

Mit der gezeigten Anordnung 1 lässt sich ein Verfahren zum Enteisen von Pritschenwagen P durchführen. Dabei ist das Bereitstellen eines Pritschenwagens P vorgesehen. Ferner ist das Bereitstellen einer zu der Durchfahrt 4 weisenden Heißluftströmung vorgesehen, was mittels der Vorrichtung 2 geschehen kann. Zudem ist ein Bewegen des Pritschenwagens P durch die Durchfahrt 4 und längs der Durchfahrtrichtung 6 vorgesehen. Das Verfahren sieht auch ein Steuern der Enteisungseinrichtung 30, insbesondere der Heißluftströmung 31, vor, beispielsweise in Abhängigkeit von einer Nutzereingabe und/oder in Abhängigkeit von Signalen von einer oder mehreren der Sensoriken 10, 12, 14. Insoweit kann erfasst werden, ob der Pritschenwagen P sich in der Durchfahrt 4 befindet, um in Abhängigkeit davon die Heißluftströmung 31 bereitzustellen , zu regeln und/oder auszustellen.

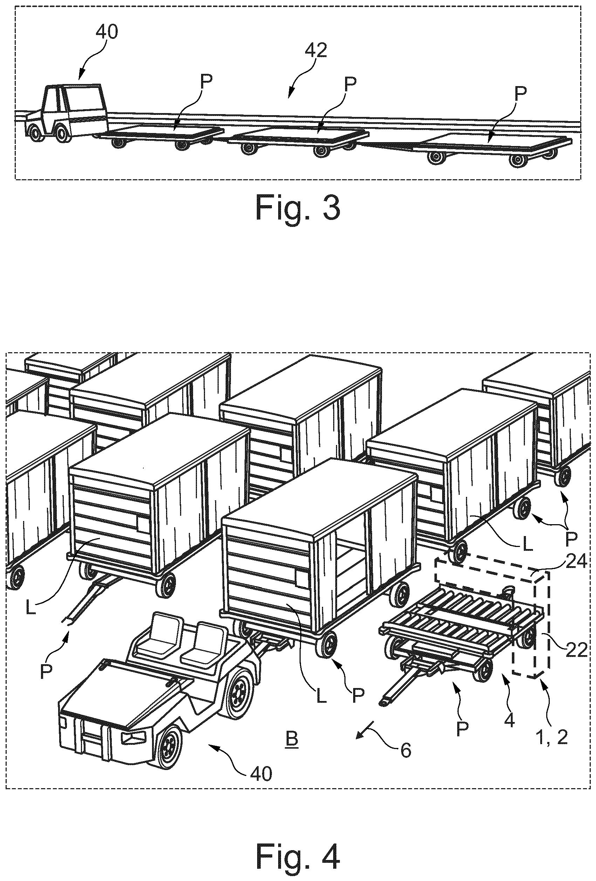

Bei dem Verfahren werden beispielsweise drei Pritschenwagen P als von einer Zugmaschine 40 gezogener Schleppverband durch die Durchfahrt 4 gezogen. Einen solchen Schleppverband, der sich an einem Flughafen befindet, zeigt die Fig. 3. Die Heißluftströmung wird beispielsweise erst dann bereitgestellt, wenn die Zugmaschine 40 aus dem Schleppverband die Durchfahrt 4 passiert hat. Dabei kann sich die Enteisungseinrichtung 30 automatisch auf einen jeweiligen Pritschenwagen P und/oder Luftfrachtcontainer L, sofern vorhanden, ausrichten und kann automatisch ein- und ausgeschaltet werden, insbesondere in Abhängigkeit von Vorhandensein von Wasser bzw. Eis am Pritschenwagen, Temperatur des Pritschenwagens, Position des Pritschenwagens, und/oder ggf. anderen Parametern. Die Zugmaschine 40, wie in Fig. 3 und ebenfalls Fig. 4 dargestellt, ist regelmäßig bemannt. Es kann sich aber auch um eine unbemannte, ferngesteuerte und/oder autonome, Zugmaschine 40 handeln.

Fig. 3 zeigt ferner hintergründig zum Schleppverband ein Band 42, das als Förderband ausgebildet ist. Damit können Pritschenwagen P durch die Durchfahrt 4 bewegt werden.

Nicht gezeigt ist eine Variante, bei der ein Band vorgesehen ist, auf dem Pritschenwagen durch eine Durchfahrt befördert und/oder gezogen werden. Beispielsweise können Pritschenwagen auch mittels Winde durch eine Durchfahrt gezogen werden.

Fig. 4 zeigt an einem Logistik-Hub, insbesondere in der Nähe oder an einem Flughafen, eine Anordnung 1 mit einer Vorrichtung 2 und mit mehreren Pritschenwagen P, die Luftfrachtcontainer L tragen. Die Vorrichtung 2 überragt mit einem Dachabschnitt 24 einen Pritschenwagen P, insbesondere um bedarfsweise in Richtung des Bodens B eine Heißluftströmung auf den Pritschenwagen P zu richten, so dass der Pritschenwagen P enteist wird. Die Vorrichtung 2 weist vorliegend nur einen Seitenabschnitt 22 und den Dachabschnitt 24 auf, die aneinander festgelegt sind. An dem Seitenabschnitt 22 befinden sich vorliegend keine Heißluftgebläse, sondern lediglich an dem Dachabschnitt 24. Der Seitenabschnitt 22 ist beschwert, weist beispielsweise einen metallenen oder mineralischen Standfuß auf, um den Schwerpunkt der Vorrichtung 2 möglichst im Seitenabschnitt 22 zu halten und ein Umkippen trotz des auskragenden Dachabschnitts 24 zu vermeiden. Die Durchfahrt 4 wird aus dem Seitenabschnitt 22 und dem Dachabschnitt 24 gebildet. Eine Durchfahrtrichtung 6, längs der ein zu enteisender Pritschenwagen P bewegt werden sollte, weist jeweils quer zum Seitenabschnitt und zum Dachabschnitt 24.

Ferner ist in Fig. 4 ein Schleppverband aus einer Zugmaschine 40 und wenigstens drei Pritschenwagen P, die jeweils einen Luftfrachtcontainer L tragen, ist ersichtlich. Es ist denkbar, dass mittels der Vorrichtung 2 auch Luftfrachtcontainer L enteist werden können, beispielsweise auf Pritschenwagen P befindliche oder von einem Band 42 bewegte Luftfrachtcontainer L. Insoweit kann der Schleppverband zusammen mit Luftfrachtcontainern L mittels der Vorrichtung 2 enteist werden.

Es ist mit Bezug zur Fig. 4 denkbar, dass vom Seitenabschnitt 22 ein weiterer Dachabschnitt ausgeht (nicht dargestellt), der in eine andere Richtung als der Dachabschnitt 24, insbesondere in die entgegengesetzte Richtung weist. Auch auf diese Weise kann ein Gleichgewicht der Vorrichtung 2 geschaffen werden. Insoweit kann die Vorrichtung 2 mit ihren Abschnitten auch T-förmig ausgebildet sein.

Es ist denkbar, dass anstelle von oder ergänzend zu Heißluftgebläsen 32, 34, 36 ein oder mehrere Wärmestrahler vorgesehen ist bzw. sind. Ein Wärmestrahler kann beispielsweise eine Infrarotstrahlung zum Enteisen bereitstellen bzw. als Infrarotstrahler ausgebildet sein.

Es können in nicht dargestellten Beispielen auch mechanische Vorrichtungsteile vorgesehen sein, um größere Massen an Eis oder Schnee mechanisch zu entfernen, um die entsprechende Energie zum Aufschmelzen nicht aufbringen zu müssen.

### Bezugszeichenliste

- 1: Anordnung
- 2: Vorrichtung
- 4: Durchfahrt
- 5: Breite
- 6: Durchfahrtrichtung
- 7: Höhe
- 8: Steuerung
- 10: erste Sensorik
- 12: zweite Sensorik
- 14: dritte Sensorik

- 20: Gestell
- 22: Seitenabschnitt
- 24: Dachabschnitt
- 26: Seitenabschnitt

- 30: Enteisungseinrichtung
- 31: Heißluftströmung
- 32: Heißluftgebläse
- 33: Austrittsdüse
- 34: Heißluftgebläse
- 35: Austrittsdüse
- 36: Heißluftgebläse
- 37: Austrittsdüse
- 38: Energieversorgungseinri chtung
- 40: Zugmaschine
- 42: Band

- B: Boden
- P: Pritschenwagen
- L: Luftfrachtcontainer

## Patentansprüche

1. Vorrichtung (2) zum Enteisen von Pritschenwagen (P) für den Transport von Luftfrachtcontainern (L), aufweisend
eine Durchfahrt (4) für die Pritschenwagen (P),
ein Gestell (20), und
eine an dem Gestell (20) angeordnete Enteisungseinrichtung (30) mit mehreren zur Durchfahrt (4) weisenden Heißluftgebläsen (32, 34, 36),
wobei das Gestell (20) zur Bereitstellung der Durchfahrt (4) einen ersten Seitenabschnitt (22) und einen quer zum ersten Seitenabschnitt (22) ausgerichteten Dachabschnitt (24) aufweist, und
wobei die Enteisungseinrichtung (30) teilweise auf dem ersten Seitenabschnitt (22) und teilweise auf dem Dachabschnitt (24) angeordnet ist und/oder der erste Seitenabschnitt (22) und der Dachabschnitt (24) jeweils eines der mehreren Heißluftgebläse (32, 34, 36) aufweist.

2. Vorrichtung (2) nach dem voranstehenden Anspruch, die mehreren Heißluftgebläse (32, 34, 36) jeweils aufweisend einen Radiallüfter und/oder ein PTC-Element, wobei die mehreren Heißluftgebläse (32, 34, 36) elektrisch betreibbar sind, und vorzugsweise wobei wenigstens zwei der mehreren Heißluftgebläse (32, 34, 36) separat voneinander ansteuerbar sind.

3. Vorrichtung (2) nach einem der voranstehenden Ansprüche, aufweisend eine Energieversorgungseinrichtung (38) für die Enteisungseinrichtung (30) mit einem Versorgungsanschluss zum Einspeisen von Elektrizität in die Vorrichtung (2), die Enteisungseinrichtung (30) aufweisend eine Nennleistung von wenigstens 2,5 kW, 5 kW, 10 kW oder 15 kW.

4. Vorrichtung (2) nach einem der voranstehenden Ansprüche, wobei mehrere der Heißluftgebläse (32, 34, 36) längs einer Durchfahrtrichtung (6) verteilt angeordnet sind, das Gestell (20) sich nach oben verjüngt und/oder das Gestell (20) höhenverstellbar ausgebildet ist.

5. Vorrichtung (2) nach einem der voranstehenden Ansprüche, das Gestell (20) aufweisend zur Bereitstellung der Durchfahrt (4) einen zweiten Seitenabschnitt (26), der im Wesentlichen parallel zum ersten Seitenabschnitt (22) angeordnet ist, wobei eine Austrittsdüse (33, 35, 37) der Enteisungseinrichtung (30), wenigstens teilweise, zum jeweils anderen Seitenabschnitt (22, 26) weisend ausgerichtet ist, die Vorrichtung (2) aufweisend
eine Breite (5) der Durchfahrt (4) von wenigstens 1,5 m oder 2 m, und
eine Höhe (7) der Durchfahrt (4) von wenigstens 1,5 m oder 2 m.

6. Vorrichtung (2) nach dem voranstehenden Anspruch, wobei die Enteisungseinrichtung (30) auf allen von dem ersten Seitenabschnitt (22), dem zweiten Seitenabschnitt (26) und dem Dachabschnitt (24) angeordnet ist.

7. Vorrichtung (2) nach einem der voranstehenden Ansprüche, wobei die Enteisungseinrichtung (30) an dem ersten Seitenabschnitt (22), dem zweiten Seitenabschnitt (26) und/oder dem Dachabschnitt (24) verstellbar, insbesondere längs des jeweiligen Abschnitts (22, 24, 26) verschiebbar und/oder um diesen schwenkbar, angeordnet ist.

8. Vorrichtung (2) nach einem der voranstehenden Ansprüche, aufweisend
eine erste Sensorik (10) zum Erkennen von Wasser, insbesondere Eis oder Schnee, insbesondere zum Erkennen einer Menge, eines Orts und/oder eines Aggregatzustands des Wassers, beispielsweise umfassend eine Kamera, und
eine zweite Sensorik (12) zum Erfassen einer Temperatur, insbesondere einer Umgebungstemperatur und/oder einer Temperatur eines Pritschenwagens (P).

9. Vorrichtung (2) nach einem der voranstehenden Ansprüche, aufweisend
eine dritte Sensorik (14) die näherungssensitiv wenigstens gegenüber Pritschenwagen (P) ausgebildet ist.

10. Vorrichtung (2) nach einem der voranstehenden Ansprüche, aufweisend
eine/die dritte Sensorik (14), die zum Erfassen von einem Typ, einer Form und/oder einer Verformung eines Pritschenwagens (P) ausgebildet ist.

11. Vorrichtung (2) nach einem der voranstehenden Ansprüche, aufweisend
eine Steuerung (8), die zur Steuerung der Enteisungseinrichtung (30) in Abhängigkeit von einer Nutzereingabe und/oder in Abhängigkeit von Signalen von einer oder mehreren der Sensoriken (10, 12, 14) ausgebildet ist, wobei die Steuerung (8) eingerichtet ist, die Enteisungseinrichtung (30) im Betrieb der Enteisungseinrichtung (30) zu verstellen, um eine Richtung einer Heißluftströmung (31) zu verändern und/oder um eine Temperatur und/oder Leistung einer bereitgestellten Heißluftströmung (31) an Pritschenwagen (P) anzupassen.

12. Anordnung (1), aufweisend die Vorrichtung (2) nach einem der voranstehenden Ansprüche und wenigstens einen Pritschenwagen (P), der zum Transport von Luftfrachtcontainern, bevorzugt ULD-Containern, ausgebildet ist.

13. Verwendung einer Vorrichtung (2), die nach einem der Ansprüche 1 bis 11 ausgebildet ist und/oder ein zu einer Durchfahrt (4) für Pritschenwagen (P) weisendes Heißluftgebläse (32, 34, 36) aufweist, zum Enteisen von Pritschenwagen (P) an einem Logistik-Hub und/oder einem Flughafen, wobei die Pritschenwagen (P) zum Transport von Luftfrachtcontainern, insbesondere ULD-Containern, ausgebildet sind.

14. Verfahren zum Enteisen von Pritschenwagen (P),
insbesondere mittels einer Vorrichtung (2), insbesondere nach einem der Ansprüche 1 bis 11 und/oder aufweisend mehrere zu einer Durchfahrt (4) für Pritschenwagen (P) weisende Heißluftgebläse (32, 34, 36), die seitlich und oberhalb von der Durchfahrt (4) angeordnet sind,
umfassend die Schritte:
Bereitstellen eines Pritschenwagens (P),
Bereitstellen einer zu einer/der Durchfahrt (4) für Pritschenwagen (P) weisenden Heißluftströmung mittels seitlich und oberhalb von der Durchfahrt (4) angeordneten Heißluftgebläsen (32, 34, 36), und vorzugsweise Wärmestrahlung,
Bewegen des Pritschenwagens (P) durch die Durchfahrt (4), und, bevorzugt,
Steuern, insbesondere Aktivieren, Deaktivieren oder Verändern, der Heißluftströmung und/oder Wärmestrahlung in Abhängigkeit von einer Nutzereingabe und/oder in Abhängigkeit von Signalen von einer oder mehreren Sensoriken (10, 12, 14).

15. Verfahren nach Anspruch 14, wobei
der Pritschenwagen (P) oder zwei, drei oder mehr aneinander gekoppelte Pritschenwagen (P) von einer Zugmaschine (40) gezogen und dadurch durch die Durchfahrt (4) bewegt wird/werden, und/oder
der/die Pritschenwagen (P) auf einem durch die Durchfahrt (4) führenden Band (42) bewegt und dabei von dem Band (42) gefördert wird/werden oder längs des Bands (42) gezogen wird/werden, und/oder
der/die Pritschenwagen (P) beim Bewegen einen Luftfrachtcontainer (L) trägt/tragen.
